(19) Europäisches Patentamt
European Patent Office
Office européen des brevets

(11) Veröffentlichungsnummer: **0 149 489**
**A2**

(12) # EUROPÄISCHE PATENTANMELDUNG

(21) Anmeldenummer: 85100387.1

(22) Anmeldetag: 16.01.85

(51) Int. Cl.[4]: **F 16 F 9/52**
F 16 F 9/30, F 16 F 9/08
B 61 F 5/02

(30) Priorität: 17.01.84 DE 3401412

(43) Veröffentlichungstag der Anmeldung:
24.07.85 Patentblatt 85/30

(84) Benannte Vertragsstaaten:
AT BE CH FR GB IT LI NL

(71) Anmelder: AROS Hydraulik GmBH
Föhrenweg 7
D-8940 Memmingen(DE)

(72) Erfinder:
Der Erfinder hat auf seine Nennung verzichtet

(74) Vertreter: Dr. E. Wiegand Dipl.-Ing. W. Niemann Dr. M. Kohler Dipl.-Ing. J. Glaeser Dr. H.-R. Kressin
Patentanwälte
Herzog-Wilhelm-Strasse 16
D-8000 München 2(DE)

(54) **Hydraulisch wirkender Schwingungsdämpfer.**

(57) Die Erfindung betrifft einen hydraulisch wirkenden Schwingungsdämpfer mit einem ersten Zylinder, einem in diesem verschiebbaren mit einer einseitig aus dem ersten Zylinder herausragenden Kolbenstange verbundenen Kolben, der den Zylinderraum in zwei Kammern unterteilt und der mit Überströmöffnungen für das Überströmen des in der ersten und in der zweiten Kammer befindlichen inkompressiblen Dämpfungsmediums versehen ist, wobei um den ersten Zylinder bzw. Innenzylinder ein zweiter Zylinder koaxial unter Bildung eines Ringraums angeordnet ist, in dem Ringraum eine diesen Raum in einen mit einem kompressiblen Medium gefüllten ersten Teilraum und einen mit dem inkompressiblen Dämpfungsmedium gefüllten zweiten Teilraum trennende elastische Trennmembrane vorgesehen und der zweite Teilraum über eine Durchlaßöffnung mit der zweiten Kammer des Innenzylinders verbunden ist und das Dämpfungsmedium aus einer inkompressiblen Paste besteht.

EP 0 149 489 A2

Croydon Printing Company Ltd

0149489

## Beschreibung

Die Erfindung betrifft einen hydraulisch wirkenden Schwingungsdämpfer, insbesondere für Schienen- und Kettenfahrzeuge, mit einem ersten Zylinder, einem in diesem verschiebbaren, mit einer einseitig aus dem ersten Zylinder herausragenden Kolbenstange verbundenen Kolben, der den Zylinderraum in eine erste und eine zweite Kammer unterteilt und der mit Überströmöffnungen für das Überströmen des in der ersten und in der zweiten Kammer befindlichen inkompressiblen Dämpfungsmedium versehen ist.

Die Achsen und die Wiege der Schienenfahrzeuge sind mit hydraulisch wirkenden Dämpfern ausgerüstet. Die Achsdämpfung ist asymmetrisch, und zwar wird die Zugstufe härter gedämpft als die Druckstufe. Durch diese Art von Dämpfung werden senkrechte Stöße beim Überfahren von Schienenverbindungen aufgenommen und nicht auf den Wagen übertragen. Die Wiegedämpfer weisen eine symmetrische Dämpfungscharakteristik auf. Die Wiegedämpfung verhindert das Rollen oder Wiegen des Fahrzeugs. Zur Dämpfung der Querbewegungen der Wiege wird ein Dämpfer mit symmetrischem Dämpfkraftaufbau verwendet. Bisher mußten für die Achsdämpfung, für die senkrechte Wiegedämpfung und für die waagrechte Wiegedämpfung verschiedene Dämpfertypen verwendet werden, die als Dämpfungsmedium Öl enthalten. Der Nachteil der bekannten Dämpfer liegt weiterhin darin, daß nicht nur verschiedene Dämpfertypen eingesetzt werden müssen, sondern daß die Dämpfer auch relativ kompliziert aufgebaut sind und bei diesen Dämpfern sehr genaue Maßgenauigkeiten notwendig sind und die Dämpfkraftlinien dieser Dämpfer nur über einen relativ kleinen Temperaturbereich konstant sind.

bereich viskositätsstabil, so daß die Dämpfkraftlinien über den gesamten Temperaturbereich von etwa -30°C bis 200°C, insbesondere -20°C bis 100°C, weitgehend konstant sind. Die Dämpfungskräfte bei Zug und Druck können, falls dies gewünscht wird, unterschiedlich reguliert werden, und zwar durch Verwendung entsprechend harter Federn, die die Ventilklappen auf die Durchströmöffnungen drücken oder entsprechend ausgelegte Federplättchen. Für die senkrechte Achsdämpfung wird der Druckhub im allgemeinen nur wenig gedämpft, während der Zughub stärker gedämpft wird. Für die waagrechte und senkrechte Dämpfung der Wiege werden die Zug- und Druckstufen gleichmäßig gedämpft, so daß in diesem Fall die Federn bzw. Federplättchen für die Steuerung der Drosselöffnungen etwa die gleiche Steifigkeit aufweisen.

Die Trennmembrane ist schlauchförmig ausgebildet und besteht aus einem gasdichten Elastomer, insbesondere aus Butylkautschuk oder einem vulkanisierten Fluorelastomer, z.B. auf der Basis von Vinylidenfluorid-Hexafluorpropylen-Copolymerisaten. Die Trennmembrane unterteilt den äußeren Ringraum zwischen Innen- und Außenzylinder in zwei Teilräume, wobei ein Teilraum mit einem kompressiblen Medium, z.B. einem Gas, und der andere Teilraum mit einem inkompressiblen Dämpfungsmedium gefüllt ist. Die Trennmembrane bzw. der Trennschlauch ist mit dem unteren Ende oberhalb der Durchlaßöffnungen in der Wand des Innenzylinders um diesen herum gasdicht festgelegt und mit dem gegenüberliegenden Ende des Trennschlauchs im oberen Teil des Ringraums gasdicht befestigt, wobei zwischen Außenwand des Innenzylinders und der um ihn herum angeordneten Trennmembrane ein gasdicht abgeschlossener Ringraum gebildet wird, der mit einem inerten unter Überdruck stehenden Gas oder Luft gefüllt ist. Der Überdruck beträgt 0,5 bis 15, insbesondere 2 bis 6 bar. Die Befestigung des Trennschlauchs im oberen Teil des Ringraums erfolgt vorzugsweise an einem zylinderförmig geformten Einsteckstück, das den Ringraum zwischen Außen- und Innenzylinder abschließt.

Der Erfindung lag daher die Aufgabe zugrunde, einen hydraulisch wirkenden, auf Zug und Druck belastbaren Schwingungsdämpfer, insbesondere für Schienenfahrzeuge und Kettenfahrzeuge, zur Verfügung zu stellen, der sowohl als Achsdämpfer als auch als senkrechter Wiegedämpfer und als horizontaler Wiegedämpfer einsetzbar ist und bei dem das verwendete Dämpfungsmedium über einen weiten Temperaturbereich viskositätsstabil ist und somit nur eine geringfügige Veränderung von Dämpfkraft und Dämpfungscharakteristik über den Temperaturbereich eintreten und der trotzdem eine relativ einfache Konstruktion aufweisen soll.

Die Aufgabe wird gelöst durch einen Schwingungsdämpfer der eingangs angegebenen Art, der dadurch gekennzeichnet ist, daß um den ersten Zylinder ein zweiter Zylinder koaxial unter Bildung eines Ringraums angeordnet ist, daß in dem Ringraum eine diesen in einen mit einem kompressiblen Medium gefüllter erster Teilraum und einen mit dem inkompressiblen Medium gefüllter zweiter Teilraum trennende elastische Trennmembrane vorgesehen ist, daß der zweite Teilraum über eine Durchlaßöffnung mit der zweiten Kammer verbunden ist, daß die Überströmöffnungen im Kolben mit Einrichtungen versehen sind, mittels derer sie wechselweise zur ersten oder zur zweiten Kammer schließbar sind und das inkompressible Dämpfungsmedium aus einer an sich bekannten Paste, enthaltend mindestens einen feinverteilten Feststoff und Polyglykoläther, Polyglykolester, Siliconöl und/oder gesättigten, aromatischen und/oder aliphatischen Carbonsäureester,besteht.

Der erfindungsgemäße Dämpfer ist sehr einfach aufgebaut, da er keine Kammer mit einem hohen Überdruck aufweist und, mit Ausnahme des Kolbens und der Kolbenstange, keine Teile enthält, die einer Reibbeanspruchung ausgesetzt sind. Der Dämpfer besitzt daher eine sehr hohe Funktionssicherheit und auch eine entsprechend lange Dauerfunktionsfähigkeit. Die verwendete Dämpfungspaste ist über einen weiten Temperatur-Fig. 6 zeigt z.B. das Dämpfkraftdiagramm für einen erfindungsgemäßen Achsdämpfer, bei dem der Druckhub weniger gedämpft und der Zughub stärker gedämpft ist. Fig. 7 zeigt das Dämpfkraftdiagramm des waagrechten und senkrechten Wiegedämpfers, bei dem der Zughub und der Druckhub gleich stark gedämpft sind.

Wesentlich für den erfindungsgemäßen Dämpfer ist außerdem, daß mit dem erfindungsgemäß verwendeten inkompressiblen, viskositätsstabilen Dämpfungsfluid schon beim Durchströmen sehr einfacher Öffnungen bzw. Bohrungen ein relativ hoher Dämpfkraftaufbau zu erreichen ist. Das Dämpfungsfluid bleibt auch bei hoher Scherbeanspruchung homogen, wodurch eine gute Dämpfungsharmonie erreicht wird. Mit dem erfindungsgemäß eingesetzten Dämpfungsmedium lassen sich sehr hohe Strömungsgeschwindigkeiten in der Überströmöffnung des Kolbens erreichen, ohne daß sich das Dämpfungsmedium trennt, zersetzt oder aufschäumt.

Der erfindungsgemäße Dämpfer arbeitet jedoch nicht nur störungsfrei, er ist aufgrund des einfachen Aufbaus auch ohne technische Schwierigkeiten zu reparieren. Ein Vorteil des erfindungsgemäßen Dämpfers liegt darin, daß das Dämpfungsmedium mit der gesamten Wandfläche des Außenzylinders in Kontakt steht und damit eine besonders gute Wärmeableitung vom Dämpfmedium an die Umgebung gewährleistet ist.

Der erfindungsgemäße Dämpfer wird anhand der folgenden Zeichnungen näher beschrieben. Es zeigen:

Fig. 1 einen Längsschnitt durch einen erfindungsgemäßen Schwingungsdämpfer in der Druckstufe,

Fig. 2 einen Längsschnitt durch den erfindungsgemäßen Dämpfer nach Fig. 1 in der Zugstufe,

Fig. 3 eine Draufsicht auf den Kolben des erfindungsgemäßen Dämpfers nach Fig. 1 von der oberen Zylinderkammer gesehen,

Fig. 4 eine Draufsicht auf den Kolben des erfindungsgemäßen Dämpfers nach Fig. 1 von dem Ende der Kolbenstange gesehen,

Fig. 5 einen Querschnitt durch den Kolben gemäß Fig. 1,

Fig. 6 ein Dämpfkraft/Weg-Diagramm des erfindungsgemäßen Dämpfers mit einer schwächeren Dämpfung des Druckhubs und einer stärkeren Dämpfung des Zughubs,

Fig. 7 ein Dämpfkraft/Weg-Diagramm des erfindungsgemäßen Dämpfers mit einer gleich starken Dämpfung des Zug- und des Druckhubs,

Fig. 8 eine Ausgestaltung eines Teils des erfindungsgemäßen Dämpfers,

Fig. 9 eine Ausgestaltung eines Teils des erfindungsgemäßen Dämpfers (Zughub),

Fig. 10 eine Ausgestaltung eines Teils des erfindungsgemäßen Dämpfers.

Der erfindungsgemäße Dämpfer gemäß Fig. 1 besteht aus dem Innenzylinder 1, der an einem Ende durch die Dichtungspackung 2 abgedichtet ist und durch die die Kolbenstange 3 hindurchgeführt ist. Das Ende 4 der aus der Dichtungspackung 2 herausragenden Kolbenstange 3 ist mit einer Platte 5 verbunden. Die Platte 5 ist vorzugsweise auf das Ende der Kolbenstange aufgeschweißt oder aufgeschraubt. An dem dem Ende 4 der Kolbenstange gegenüber angeordneten Ende der Kolbenstange ist der Kolben 6 fest aufgebracht. Das Ende der Kolbenstange wird durch eine Abschlußscheibe 7 gebildet, die einen etwas größeren Querschnitt aufweist als der Querschnitt der Kolbenstange. Der Kolben 6 ist mit mindestens zwei axial ausgerichteten, durchgehenden Bohrungen 8a,8b ausgerüstet, die durch federbelastete Abdeckscheiben 9 und 10 zumindest auf

jeweils einer Seite des Kolbens abgedeckt werden. Die dem Ende der Kolbenstange zugeordnete Abdeckscheibe ist mit 9 bezeichnet, und die auf der gegenüberliegenden Seite des Kolbens angeordnete Abdeckscheibe ist mit 10 bezeichnet. Die Abdeckscheibe 9 wird durch die Feder 11, die durch die über den Querschnitt der Kolbenstange hinausragende Abschlußscheibe 7 abgestützt wird, gegen die Bohrungen 8b gedrückt, und die Abdeckscheibe 10 wird durch die Feder 12 von oben gegen die Bohrungen 8a gedrückt, wobei die Feder 12 an der Ausnehmung 13 der Kolbenstange abgestützt ist. Der untere Teil der Kolbenstange 3 weist einen etwas kleineren Querschnitt als der Rest der Kolbenstange auf, so daß der Kolben 6, die beiden Abdeckplatten 9 und 10 und die Federn 11 und 12 auf die Kolbenstange aufgeschoben werden können.

Das dem Dichtungspaket 2 gegenüberliegende Ende 14 des Zylinders ist durch die Bodenplatte 15 abgeschlossen, an der ein Auge 16 befestigt ist zur Aufhängung des Dämpfers. Um den Innenzylinder 1 ist ein Außenzylinder 17 unter Bildung eines Ringraums 19 angeordnet, der am unteren Ende durch die gemeinsame Bodenplatte 15 und am gegenüberliegenden Ende durch eine zylinderförmige Abdeckplatte 18 abgeschlossen wird. Die Bodenplatte kann auch als zylinderförmiges Paßstück 15a ausgebildet sein, das in den Ringraum 19 einpaßbar ist und den Ringraum abdichtet. Das Paßstück 15a wird durch eine Überwurfmutter 71, wie z.B. in Fig. 9 dargestellt, gehaltert. Die Bodenplatte 15 ist vorzugsweise durch eine Schraubenverbindung mit der Wand des Außenzylinders 17 verbunden. Die Abdeckplatte 18 weist eine nach innen gerichtete umlaufende Auskragung 18a auf, die die Dichtungspackung 2 teilweise abdeckt und haltert. Die Abdeckplatte 18 ist mittels eines O-Ringes 47 gegenüber der Außenwand des Innenzylinders 1 und mittels eines O-Ringes 48 gegenüber der Innenwand des Außenzylinders 17 abgedichtet.

Der Ringraum 19 wird durch eine elastische, gasdichte Membrane 20 in einen unteren Teilraum 21 und den oberen Teilraum 23 geteilt. Der untere Teilraum 21 dient als Ausgleichsraum für die Dämpfungspaste, die durch die Öffnung 22 in der Zylinderwand aus dem Innenraum des Innenzylinders 1 in den Teilraum 21 des Ringraums hineingepreßt wird und umgekehrt. Der obere Trennraum 23 ist mit einem kompressiblen Dämpfungsmedium, insbesondere Luft oder einem Inertgas wie Stickstoff unter Vorspannung, gefüllt. Der Druck im oberen Teilraum beträgt etwa 0,5 bis 15 bar. Die schlauchförmige Trennmembrane 20 ist mit dem unteren Ende 20a auf der Außenwand des Innenzylinders 1 und mit dem oberen Ende 20b an einen zylinderförmig ausgebildeten, den Ringraum 19 abschließenden Einsteckstück 40 gasdicht festgelegt, so daß ein Gasraum zwischen der Trennmembrane 20 und einem Teil der Außenwand des Innenzylinders 1 gebildet wird. Die Befestigung der den Zylinder 1 umfassenden Trennmembrane erfolgt am oberen und unteren Ende der schlauchförmigen Membrane durch eine Klemmvorrichtung oder durch Verkleben.

Das Einsteckstück 40 ist zylinderförmig ausgebildet und an der Innenseite über einen Sprengring 55 an der Wand des Innenzylinders 1 gehalten und über einen O-Ring 56, 58 an der Innenwand des Außenzylinders 17 abgedichtet. Das Einsteckstück 40 nach Fig. 8 wird an der Außenwand des Innenzylinders 1 über den O-Ring 57 abgedichtet. Das Einsteckstück 40 weist an dem dem Ringraum 19 zugewandten Ende eine Ringnut auf, auf die das obere Ende 20b der Trennmembrane 20 aufgeschoben und dort befestigt ist.

Das Einsteckstück 40 schließt den Ringraum 19 nach oben ab. Die Halterung des Einsteckstücks erfolgt durch eine in das obere Ende des Ringraums lösbar einsetzbare Abdeckplatte 18

(s. Fig. 1). Das Einsteckstück 40 kann nach einer Ausgestaltung auch durch eine Überwurfmutter 41 gehalten werden, die auf das obere Ende des Außenzylinders 17 aufgeschraubt ist (s. Fig. 8). Bei dieser Ausgestaltung deckt eine nach innen gerichtete Auskragung 42 der Überwurfmutter 41, die die Kolbenstange 3 abdichtende Dichtungspackung 2 teilweise ab und haltert sie auf diese Weise.

Die Dichtungspackung 2 besteht aus einem zylinderförmigen Überwurfteil 65, das mit einer axialen Öffnung 66 für die Durchführung der Kolbenstange 3 versehen ist. Die Abdichtung der Kolbenstange erfolgt über Dichtungsringe 67, 68.

Zwischen der Abdeckplatte 18 und dem Einsteckstück 40 kann ein O-Ring 69 eingelegt sein.

Die Durchlaßöffnung 22 im unteren Ende des Innenzylinders 1 ist auf der Zylinderinnenseite durch eine Federblende bzw. Ringblende 24 abgedeckt. Die Federblende 24, die mit mindestens einer Drosselöffnung 25 ausgerüstet ist, ist so auf die Innenwand des Zylinders 1 aufgelegt, daß die Federblende bei Druckbelastung des Dämpfers (s. Fig.1) an der Innenwand anliegt und die Dämpfungspaste durch die Drosselöffnung 25 und die darunter liegende Durchlaßöffnung 22 in den Teilraum 21 fließt, während bei Zugbelastung des Dämpfers (s. Fig. 2) die Federblende von der Innenwand des Zylinders 1 abgehoben wird und die Dämpfungspaste ungehindert durch die Öffnung 22 vom Teilraum 21 in die Kammer 28 , 28b des Zylinders 1 strömen kann.

Die Dämpfungspaste ist mit 26 bezeichnet. Die Dämpfungspaste füllt den Innenraum des Zylinders 1 und den Teilraum 21 des Dämpfers aus. Das Dämpfungsmedium 26 kann als Feststoff etwa 5 bis 80 Gew.-% Aluminiumoxid, Aluminiumsilicat, Aluminiumhydroxid, Aluminiumcarbonat, Aluminiumphosphat, Aluminiumpolyphosphat, Kryolith, Bariumsulfat, Calciumcarbonat, Calciumhydroxid, Calciumphosphat, Calciumfluorid, Magnesiumoxid, Magnesiumcarbonat, Magnesiumsilicat, Magnesiumaluminiumsilicat, Magnesiumstearat, Lithiumstearat, Molybdänsulfid, Siliciumdioxid, Sillimanit, Titandioxid, Zinksulfid, Talg, Kaolin, Zinkpyrophosphat, Graphit und/oder Kieselsäure in einer Teilchengröße von 80 % $<$ 10 µm, bezogen auf das Gesamtgewicht der Paste, enthalten.

Ferner ist es zweckmäßig wenn die Paste zusätzlich etwa 0,1 bis 4 Gew.-%, bezogen auf das Gesamtgewicht der Paste, eines Netzmittels enthält.

Dieses Netzmittel kann beispielsweise ein Aminsalz der Ölsäure, der Linolsäure, der Palmitinsäure und/oder der Stearinsäure sein. Denkbar sind hierfür ferner Talgfettsäurediamine, Kokosfettsäurediamine, Naphthalinsulfonate, Alkylarylsulfonate, Fettalkohol, Polyglycoläther, äthoxylierte Acetylenalkohole, Perfluoralkylgruppen enthaltende Alkylverbindungen, fluoriertes Alkylpolyoxyäthylenethanol, Kaliumfluoralkylcarboxylat und/oder fluoriertes Alkylammoniumjodid sein. Ferner kann auch ein Calciumbetonit, ein Natriumbetonit, Asbest und/oder hochdisperse Kieselsäure zugegeben sein. Schließlich hat es sich als noch zweckmäßig erwiesen, wenn die Paste ein Siliconöl der Viskosität von 100 bis 2000 mm²/s bei 25°C, vorzugsweise Dimethylpolysiloxan, Phenylmethylpolysiloxan und/oder fluoriertes Polysiloxan, enthält.

Als Polyglycole werden insbesondere die Mono- und/oder Diester bzw. Mono- und/oder Diäther der Polyäthylen-, Polypropylen- oder Polybutylenglycole mit einer Viskosität von 10 $mm^2/s$ bis 1000 $mm^2/s$ bei $50^oC$ in der Paste 6 verwendet.

Als Carbonsäureester enthält die Paste insbesondere den Ester eines gesättigten aliphatischen Alkohols mit 5 bis 10 C-Atomen mit einer gesättigten aliphatischen oder aromatischen Mono- oder Dicarbonsäure oder auch aliphatischen Tricarbonsäure.

Bei Druckbelastung des erfindungsgemäßen Dämpfers gemäß Fig. 1 wird die Kolbenstange 3 mit dem Kolben 6 in dem Zylinder 1 in Pfeilrichtung verschoben. Dabei wird das inkompressible Dämpfungsmedium 26 in der unteren Kammer 28 des Zylinders durch die Öffnungen 8a des Kolbens 6 und durch die Drosselöffnung 25 der Ringblende 24 in den Ausgleichsraum 21 des Außenzylinders 17 hineingepreßt. Dabei wird die Stoßbelastung gedämpft. Die Dämpfkraft baut sich auf, wenn die Paste durch die kleine Drosselöffnung 25 der Ringblende und durch die Aussparungen 27 in der unteren

0149489

Oberfläche des Kolbens 6 und die Durchbohrungen 8a hindurchgepreßt wird und dabei die Abdeckscheibe 10, die auf der oberen Oberfläche des Kolbens aufliegt, gegen die Kraft der Feder 12 anhebt. Die Feder 12 ist vorzugsweise eine Tellerfeder. Diese Feder ist an der Ausnehmung 13 der Kolbenstange abgestützt. Während der Druckbelastung des Dämpfers sind die Durchlaßöffnungen 8b des Kolbens durch die auf der unteren Oberfläche des Kolbens 6 aufliegende Abdeckscheibe 9 verschlossen. Durch das in den unteren Teilraum 21 einströmende Dämpfungsmedium wird die elastische Trennmembrane 20 im Ringraum 19 nach innen verschoben bzw. zusammengedrückt, wobei das kompressible Medium in dem oberen Teilraum 23 entsprechend komprimiert wird.

Bei der Zugbelastung des erfindungsgemäßen Dämpfers (vgl. Fig. 2) wird die Kolbenstange 3 mit dem Kolben 6 in Pfeilrichtung im Zylinder 1 nach oben verschoben. Dabei wird das sich in der oberen oder ersten Kammer 29 des Zylinders befindende Dämpfungsmedium 26 durch die Aussparungen 30 auf der oberen Oberfläche des Kolbens und die Durchlaßöffnungen 8b hindurch in die untere oder zweite Kammer 28 des Zylinders 1 gepreßt unter Anhebung der Abdeckplatte 9, die durch die Feder 11 gegen die Öffnungen 8b im Kolben gedrückt wird. Gleichzeitig wird das im unteren Teilraum 21 des Außenzylinders 17 enthaltene Dämpfungsmedium durch die Öffnung 22 im unteren Teil des Zylinders 1 hindurchgesaugt. Dabei wird die ringförmige Federblende 24 von der Innenwand der Zylinderkammer 28 abgehoben, so daß die Paste relativ ungehindert in die untere Zylinderkammer 28 eindringen kann. Während der Zugbelastung des Dämpfers sind die Öffnungen 8a im Kolben durch die auf die obere Oberfläche des Kolbens aufgedrückte Abdeckplatte verschlossen. Die Bewegung des Kolbens 6 im Zylinder 1 während der Zugbelastung wird durch die Bewegung der Trennmembrane im Ringraum 19 unterstützt, die sich während der Zugbelastung nach außen wölbt.

Dabei wird gleichzeitig das kompressible Medium im zweiten Teilraum 23 entspannt.

Die Dämpfkraft beim Durchtritt des Dämpfungsmediums durch die Kolbenöffnungen kann dadurch variiert werden, daß die Steifigkeit der Federn 11 und 12, die die Abdeckplatten 9 und 10 gegen die Öffnungen im Kolben 6 drücken, entsprechend eingestellt wird. Je steifer die Federkraft der insbesondere als Tellerfedern ausgebildeten Federn ist, je steiler ist der Anstieg der Dämpfkraftlinie zu Beginn der jeweiligen Druckbelastung bzw. Zugbelastung.

Die Außenwand des Außenzylinders 17 kann mit beliebig geformten Kühlrippen zur Verbesserung der Wärmeabführung versehen sein.

An der Platte 5, die mit dem Ende 4 der Kolbenstange 3 verbunden ist, ist eine Abdeckhaube 31 befestigt, die die Kolbenstange 3 beim Hinausfahren und Hineinfahren in den Zylinder vor Staub und Verschmutzung schützt.

An der Platte 5 am Ende 4 der Kolbenstange 3 ist ein Aufhängungselement 32 befestigt, das der Aufhängung des Dämpfers an der Achse oder dem Wagengestell dient.

Fig. 5 zeigt einen Querschnitt durch einen Kolben eines erfindungsgemäßen Dämpfers gemäß Fig. 1. Die axial angeordneten Durchbohrungen 8a sind auf der der Zylinderkammer 28 zugewandten Seite mit radialen Ausnehmungen 27 verbunden, die sich auf der Oberfläche der Kolbenscheibe von der Durchbohrung 8a zum Rand der Kolbenscheibe hin erstrecken. Die axialen Durchbohrungen 8b sind auf der der oberen Zylinderkammer 29 zugewandten Seite mit in

0149489

radialer Richtung sich erstreckenden Ausnehmungen 30 verbunden, die sich von der Durchbohrung 8b zum Rand der Kolbenscheibe hin erstrecken. Die Abdichtung des Kolbens an der Innenwand des Innenzylinders 1 erfolgt über einen Dichtungsring 34.

Fig. 6 zeigt ein Dämpfkraft/Hub-Diagramm, bei dem die Druckstufe schwächer gedämpft wird als die Zugstufe, so daß sich eine unsymmetrische Dämpfkraftlinie ergibt. Die Dämpfkräfte bei der Zugbelastung und die Dämpfkräfte bei der Druckbelastung sind über den Hub (Kolbenbewegung in mm/s) aufgetragen. Dieser Dämpfkraftverlauf ist insbesondere bei den senkrecht angeordneten Achsdämpfern erwünscht, um die Stöße weich aufzufangen, die beim Überfahren der Stoßverbindungen von Schienen entstehen.

Fig. 7 zeigt ein Dämpfkraft/Hub-Diagramm, bei dem die Federn gleich stark eingestellt sind, so daß der Druckhub und der Zughub gleich stark gedämpft werden und sich dadurch ein symmetrischer Dämpfkraftverlauf ergibt. Auch hier ist die Dämpfkraft des Zughubs sowie die Dämpfkraft des Druckhubs über den Hub (Kolbenbewegung in mm/s) aufgetragen. Ein derartiger Dämpfkraftverlauf liegt insbesondere bei den Wiegedämpfern vor, und zwar sowohl bei den senkrecht als auch bei den waagrecht angeordneten Wiegedämpfern der Schienenfahrzeuge.

Fig. 8 zeigt eine Ausgestaltung des Einsteckstücks 40, an dem das obere Ende 20b der elastischen, schlauchförmigen Trennmembrane 20 befestigt ist. Das Einsteckstück 40 gemäß Fig. 8 besteht aus einem zylinderförmig ausgebildeten Einsteckstück, das in den oberen Teil des Ringraums 19 eingepaßt ist und den Ringraum 19 dadurch nach oben abschließt. Das Einsteckstück 40 ist an der Außenwand des Innenzylinders 1 mit einem Dichtungsring 57 und an der Innenwand des Außenzylinders 17 mit einem Dichtungsring 58 abgedichtet. Der untere Teil des Einpaßstücks 40, der dem Ringraum 19 zugewandt ist, ist mit einer Ringnut 59 versehen, auf die das obere Ende 20b der schlauchförmigen Trennmembrane aufgeschoben und dort befestigt ist. Die gasdichte Aufbringung der Trennmembrane auf der Ringnut kann z.B. mittels einer Schelle vorgenommen werden. Das Einsteckstück 40 wird durch eine Überwurfmutter 41 in ihrer Position gehalten. Die Überwurfmutter 41 ist mit einer nach innen gerichteten umlaufenden Auskragung 42 ausgerüstet, die das Einpaßstück teilweise abdeckt und auf diese Weise haltert. Das Einsteckstück 40 ist mit einer nach innen gerichteten umlaufenden Auskragung 59a versehen, die die um die Kolbenstange 3 herum angeordnete Dichtungspackung 2 teilweise abdeckt und in ihrer Position haltert.

Fig. 9 zeigt eine Ausgestaltung des Kolbens des erfindungsgemäßen Dämpfers. Der Kolben ist bei dieser Ausführungsform mit der allgemeinen Bezifferung 6 versehen. Der Kolben ist mit schräg angeordneten Durchbohrungen 50 ausgerüstet, die auf der der Zylinderkammer 29 zugewandten Seite teilweise mit einem Federplättchen 51 abgedeckt und auf der der unteren Zylinderkammer zugewandten Seite mit einem Federplättchen 52 teilweise abgedeckt sind. Die Abdichtung des Kolbens 6 gegenüber der Innenwand des Innenzylinders 1 erfolgt über einen Dichtungsring 34. Der Kolben ist am Ende der Kolbenstange durch eine am Ende der Kolbenstange vorgesehenen Einschnürung 3a festgelegt.

Die Fig. 9 zeigt außerdem eine Ausgestaltung der Duchlaßöffnung 22, die den Ringraum 19 mit der unteren Zylinderkammer 28 verbindet. Bei dieser Ausgestaltung ist die Federblende ersetzt durch eine feststehende Ventilplatte , die insgesamt mit 60 bezeichnet ist. Die Ventilplatte 6o ist an einem mit der Bodenplatte 15 a verbundenen Stutzen 15b befestigt. Der Stutzen 15 b ist vorzugsweise einstückig mit der Bodenplatte 15a verbunden und axial angeordnet. Die Ventilplatte 60 ist oberhalb der Durchlaßöffnung 22 angeordnet und unterteilt die untere Zylinderkammer 28 in eine obere Teilkammer 28a und eine unterhalb der Ventilplatte 60 angeordnete Teilkammer 28b. Die Ventilplatte 60 ist mit schräg angeordneten Durchbohrungen 61 ausgerüstet, die auf der der Teilkammer 28a zugewandten Seite teilweise mit einem Federplättchen 62 und auf der der unteren Teilkammer 28b zugewandten Seite mit einem Federplättchen 63 teilweise abgedeckt sind. Die Abdichtung der Ventilplatte 60 gegenüber der Innenwand des Innenzylinders 1 erfolgt über einen Dichtungsring 64.

Bei Zugbelastung des Dämpfers,wie in Fig. 9 dargestellt,wird das Dämpfungsmedium 26 durch die Durchlaßöffnung 22 in der Wand des Zylinders 1 hindurch in die untere Teilkammer 28b gepreßt aufgrund der unter Druck stehenden Trennmembrane 20. Von dort strömt das Dämpfungsmedium 26 durch die offenen Durchbohrungen 61 hindurch in die Teilkammer 28a, wobei das Federplättchen 62 angehoben wird. Das Federplättchen 62 besteht vorzugsweise aus einem Plättchen mit schwacher Rückfederungskraft,um die Rückstellung des Schwingungsdämpfers in die Ausgangslage zu erleichtern bzw. nicht zu behindern. Bei der Druckbelastung des Dämpfers liegt das obere Federplättchen 62 auf der Oberfläche der Ventilplatte 60 auf und das Federplättchen 63 wird durch das durch einen Teil der Durchbohrungen 61 hindurch strömende Dämpfungsmedium von der Oberfläche der Ventilplatte 60 abgehoben. Das Federplättchen 63 besitzt vorzugsweise eine höhere Federrückstellkraft als das Federplättchen 62, um eine zusätzliche Drosselwirkung beim Durchströmen des Dämpfungsmediums durch die Durchbohrungen 61 von der Zylinderkammer 28a zur Zylinderkammer 28b zu bewirken.

Der Ringraum 19 und die untere Zylinderkammer 28b sind durch eine gemeinsame Bodenplatte 15 a abgeschlossen, die zylinderförmig ausgebildet ist und in den Ringraum 19 eingepaßt ist. Die Abdichtung der Bodenplatte 15a gegenüber der Innenwand des Außenzylinders 17 erfolgt über einen O-Ring 70. Die Bodenplatte 15a wird durch eine Überwurfmutter 71 gehalten, die auf das untere Ende der Außenwand des Außenzylinders 17 aufgeschraubt ist.

Fig. 10 zeigt eine Ausgestaltung des erfindungsgemäßen Dämpfers mit einem Abdeckteil 38, das die obere Zylinderkammer 29 und gleichzeitig den äußeren Ringraum 19 nach oben abdichtet. Das Abdeckteil 38 ist zylinderförmig ausgebildet und auf das obere Ende des Zylinders aufgesetzt, wobei mittig durch das Abdeckteil die Kolbenstangen 3 hindurchgeführt ist. Das Abdeckteil 38 ist mit einer umlaufenden Nut 37 ausgerüstet, in die das obere Ende der Trennmembrane 20, das als O-Ring ausgebildet ist, einlegbar ist. Bei dieser Ausführungsform des erfindungsgemäßen Dämpfers endet der Trennschlauch 20 am oberen Ende in einer umlaufenden Verdickung, die einen derartigen Durchmesser aufweist, daß diese O-ringförmige Verdickung nicht aus der Nut 37 herausrutschen kann. Die O-ringförmige Verdickung der Trennmembrane 20 wird bei dieser Ausführungsform einmal durch das Abdeckteil 38 und auf der anderen Seite durch die Innenwand des Außenzylinders 17 gehalten. Diese Ausgestaltung der Befestigung des oberen Teils der Trennmembrane 20 hat den Vorteil, daß die Trennmembrane sicher gehalten wird und besonders einfach montierbar ist. Ein weitere Vorteil dieser Ausgestaltung liegt darin, daß das Haltestück für die Trennmembrane und die Dichtungspackung als einstückiges Element ausgebildet sind, wobei die Kolbenstange 3 in dem Abdeckteil 38 in einer Führungshülse aus Metall oder mit Kunststoff überzogenen Metall geführt wird. Die Führungshülse ist mit 75 bezeichnet. Unterhalb der Führungshülse ist in einer Ausnehmung der Abdeckplatte 38 ein Dichtungsring 76 angeordnet und unterhalb des Dichtungsringes 76 ist eine Haltescheibe 77 vorgesehen, die um die Kolbenstange herum angeordnet ist und die in einer Ausstülpung 78 am unteren Teil der Abdeckplatte 38 eingelegt ist. Oberhalb der Führungshülse 75 ist ein Abstreifring 79 angeordnet, der durch einen Sprengring 80 gehalten wird. Das Abdeckteil 38 wird durch eine Überwurfmutter 41 gehalten, die auf die Außenwand des Außenzylinders 17 aufschraubbar oder aufsetzbar ist.

Durch das Abdeckteil 38 kann ein Ventil hindurchgeführt sein, das in dem Teilraum 23, der mit einem kompressiblen Medium gefüllt ist, endet. Durch dieses Ventil kann der Teilraum 23 entsprechend der gewünschten Rückstellkraft druckbeaufschlagt werden. Das Ventil, das in Fig. 10 nicht dargestellt ist, kann auch bei den anderen Ausgestaltungsformen des erfindungsgemäßen Dämpfers vorgesehen sein, so daß gewährleistet ist, daß der Teilraum unter Druck gesetzt werden kann oder daß der Druck in den Teilraum, falls notwendig, nach entsprechend langer Gebrauchszeit des Stoßdämpfers in der gewünschten Weise ausgeglichen werden kann.

Die in Fig. 10 beschriebene Ausführungsform der Befestigung des oberen Teils der Trennmembrane hat den Vorteil, daß es sich hierbei um eine besonders einfache Konstruktion handelt und daß das Paßstück einstückig ausgebildet ist. Es ist nur noch eine Dichtung auf der Innenseite des Innenzylinders notwendig. Die Abdichtung des Paßstücks an der Innenwand des Außenzylinders wird durch das obere Teil 36 der Trennmembrane 20 übernommen. Das Gasvolumen im Ausgleichsraum bzw. Teilraum 23 konnte durch diese Art der Befestigung der Trennmembrane vergrößert werden im Verhältnis zu den anderen Ausführungsformen des erfindungsgemäßen Dämpfers, da der Durchmesser des Teilraumes 23 am oberen Ende relativ groß ist.

## Patentansprüche

1. Hydraulisch wirkender Schwingungsdämpfer, insbesondere für Schienen- und Kettenfahrzeuge, mit einem ersten Zylinder, einem in diesem verschiebbaren, mit einer einseitig aus dem ersten Zylinder herausragenden Kolbenstange verbundenen Kolben, der den Zylinderraum in eine erste und eine zweite Kammer unterteilt und der mit Überströmöffnungen für das Überströmen des in der ersten und in der zweiten Kammer befindlichen inkompressiblen Dämpfungsmediums versehen ist, d a d u r c h  g e k e n n z e i c h n e t , daß um den ersten Zylinder (1) ein zweiter Zylinder (17) koaxial unter Bildung eines Ringraums (19) angeordnet ist, daß in dem Ringraum eine diesen in einen mit einem kompressiblen Medium gefüllter erster Teilraum (23) und einen mit dem inkompressiblen Medium (26) gefüllter zweiter Teilraum (21) trennende elastische Trennmembrane (20) vorgesehen ist, daß der zweite Teilraum (21) über eine Durchlassöffnung (22) mit der zweiten Kammer (28, 28b) verbunden ist, daß die Überströmöffnungen (8a, 8b) im Kolben (6) mit Einrichtungen versehen sind, mittels derer sie wechselweise zur ersten (29) oder zur zweiten Kammer (28) schließbar sind und das inkommpressible Dämpfungsmedium (26) aus einer an sich bekannten Paste, enthaltend mindestens einen feinverteilten Feststoff und Polyglykoläther, Polyglykolester, Siliconöl und/oder gesättigten, aromatischen und/oder aliphatischen Carbonsäureester, besteht.

2. Schwingungsdämpfer nach Anspruch 1, dadurch gekennzeichnet, daß die Öffnungen (8a, 8b) im Kolben (6) aus mindestens zwei axialen, durchgehenden Durchbohrungen bestehen, die an einem Ende mit radial sich zum Rand des Kolbens hin erstreckenden Aussparungen (27, 30) auf der Oberfläche der Kolbenscheibe verbunden sind.

3. Schwingungsdämpfer nach Anspruch 1, dadurch gekennzeichnet, daß die Einrichtungen zum Verschließen der Öffnungen im Kolben (6) aus Rückschlagventilen bestehen, die sich nur bei Druckbelastung bzw. bei Zugbelastung des Dämpfers für den Durchtritt des Dämpfungsmediums (26) öffnen und dabei entsprechend der Kraft der eingesetzten Federn (11, 12) entsprechende Drosselöffnungen bilden.

4. Schwingungsdämpfer nach Anspruch 1 und/oder 3, dadurch gekennzeichnet, daß die Einrichtung zum Schließen der Öffnungen im Kolben (6) aus einer von oben und einer von unten auf die Kolbenscheibe unter Federbelastung aufgesetzte Abdeckplatte (9, 10) besteht, die die Öffnungen im Kolben entsprechend der Druckbelastung bzw. Zugbelastung des Dämpfers für den Durchtritt des Dämpfungsmediums (26) öffnen bzw. schließen.

5. Schwingungsdämpfer nach Anspruch 4, dadurch gekennzeichnet, daß die Federn, die die Platten (9, 10) gegen die Oberflächen des Kolben (6) drücken, aus Tellerfedern bestehen, die eine gleich starke Steifigkeit oder eine unterschiedliche Steifigkeit aufweisen.

6. Schwingungsdämpfer nach Anspruch 5, dadurch gekennzeichnet, daß die bei Druckbelastung des Dämpfers beanspruchte Feder weniger steif ist als die bei der Zugbelastung beanspruchte Feder.

7. Schwingungsdämpfer nach Anspruch 1, dadurch gekennzeichnet, daß bei Zugbelastung des Dämpfers das Dämpfungsmedium (26) von der ersten Kammer (29) über die Kolbenausnehmungen (30) und die axialen Kolbenöffnungen (8b) in die zweite bzw. untere Kammer (28) fließt und bei Druckbelastung des Dämpfers über die Kolbenausnehmungen (27) auf der Oberfläche des Kolbens und die axialen Kolbenöffnungen (8a) von der zweiten bzw. unteren Kammer (28) in die erste bzw. obere Kammer (29) fließt.

8. Schwingungsdämpfer nach einem der Ansprüche 1 bis 7, dadurch gekennzeichnet, daß die Durchlaßöffnung (22) aus mindestens einer Bohrung besteht, die im Innern des Zylinders (1) von einer mit einer Drosselöffnung (25) versehenen Federblende oder Ringblende (24) abgedeckt ist.

9. Schwingungsdämpfer nach Anspruch 1, dadurch gekennzeichnet, daß der Kolben (6) mit schräg zur Achse verlaufenden Durchbohrungen (50) ausgerüstet ist, die durch ein oberes und ein unteres Federplättchen (51, 52) so abgedeckt sind, daß bei Druckbelastung des Dämpfers ein Teil der Durchbohrungen von dem unteren Federplättchen (52) abgedeckt wird, während gleichzeitig das obere Federplättchen (51) durch das durch die freien Durchbohrungen hindurchfließende Dämpfungsmedium (26) abgehoben wird.

10. Schwingungsdämpfer nach Anspruch 1, dadurch gekennzeichnet, daß der Kolben (6) mit schräg zur Achse verlaufenden Durchbohrungen (50) ausgerüstet ist, die durch ein oberes und ein unteres Federplättchen (51, 52) so abgedeckt sind, daß bei Zugbelastung des Dämpfers ein Teil der Durchbohrungen von dem oberen Federplättchen (51) abgedeckt wird, während gleichzeitig das untere Federplättchen (52) durch das durch die freien Durchbohrungen hindurchfließende Dämpfungsmedium abgehoben wird.

11. Schwingungsdämpfer nach den Ansprüchen 1, 8 oder 9, dadurch gekennzeichnet, daß an der Bodenplatte (15a) über einen Stutzen (15b) oberhalb des Durchlasses (22) eine mit Durchbohrungen (61) ausgerüstete Ventilplatte (60) befestigt ist, die die untere Kammer (28) in zwei über die Durchbohrungen (61) miteinander in Verbindung stehende Unterkammern (28a, 28b) unterteilt.

12. Schwingungsdämpfer nach Anspruch 11, dadurch gekennzeichnet, daß die Durchbohrungen (61) auf der der oberen Unterkammer (28a) zugewandten Seite und der der unteren Unterkammer (28b) zugewandten Seite teilweise mit Federplättchen (62, 63) abgedeckt sind, wobei das obere Federplättchen (62) eine geringere Steifigkeit aufweist als das untere Federplättchen (63)

13. Schwingungsdämpfer nach einem der Ansprüche 1 bis 12, dadurch gekennzeichnet, daß die Trennmembrane (20) schlauchförmig ausgebildet ist und aus einem gasdichten Elastomer besteht.

14. Schwingungsdämpfer nach einem der Ansprüche 1 bis 13 dadurch gekennzeichnet, daß das eine Ende der schlauchförmigen Trennmembrane(20) gasdicht auf dem unteren Teil des Zylinders (1) angeordnet ist und das gegenüberliegende Ende (20b) an dem oberen Teil des Zylinders und im Abstand von der Zylinderoberfläche unter Bildung des ersten Teilraums (23) gasdicht angeordnet ist.

15. Schwingungsdämpfer nach einem der Ansprüche 1 bis 14, dadurch gekennzeichnet, daß der obere Teile (20b) der Trennmembrane(20) gasdicht an einem zylinderförmigen Einsteckstück (40), das den um den Zylinder (1) angeordneten Ringraum abdichtet, befestigt ist.

16. Schwingungsdämpfer nach Anspruch 15, dadurch gekennzeichnet, daß das zylinderförmige Einsteckstück (40) mittels einer lösbaren Abdeckplatte (18), die eine umlaufende Auskragung (18a) aufweist und die die Dichtungspackung (2) zumindest teilweise abdeckt oder mittels einer Überwurfmutter (41), die eine umlaufendenach innen gerichtete Auskragung (42) aufweist, und die die Dichtungspackung (2) zumindest teilweise abdeckt, gehalten wird.

17. Schwingungsdämpfer nach einem der Ansprüche 1 bis 14, dadurch gekennzeichnet, daß der obere Teil (36) der Trennmembrane (20) als O-ringförmige Verdickung ausgebildet ist und in eine umlaufende Nut (37) eines Abdeckteils (38), das den Dämpfer nach außen gasdicht abdichtet, eingelegt ist.

18. Schwingungsdämpfer nach Anspruch 17, dadurch gekennzeichnet, daß das Abdeckteil (38) die Zylinderkammer (29) und den Ringraum (19) abdichtet und daß das Abdeckteil (38) einstückig ausgebildet ist, wobei das Abdeckteil (38) eine mittig angeordnete Durchbohrung für die Durchführung der Kolbenstange (3) aufweist und in Gebrauchslage durch eine Überwurfmutter (41) auf die Öffnungen des Zylinders aufgepreßt wird.

19. Schwingungsdämpfer nach einem der Ansprüche 1 bis 18, dadurch gekennzeichnet, daß der erste Teilraum (23) mit einem inerten unter Überdruck stehenden Gas gefüllt ist.

2o. Schwingungsdämpfer nach einem der vorhergehenden Ansprüche, dadurch gekennzeichnet, daß der Durchlaß (22) im unteren Teil der Wand des Zylinders (1) durch eine unter Federkraft stehende Ringblende (24) abgedeckt ist, wobei die Ringblende bei Zugbelastung des Dämpfers von der Öffnung (22) für den ungehinderten Durchtritt des Dämpfmediums (26) aus dem unteren Teilraum (21) des Ringraums in das Innere der Kammer (28) des Zylinders (1) abgehoben ist.

21. Schwingungsdämpfer nach Anspruch 20, dadurch gekennzeichnet, daß die Ringblende (24) mit mindestens einer Drosselöffnung (25), die einen kleineren Durchmesser als der darunter angeordnete Durchlaß (22) in der Wand des Zylinders (1) aufweist, versehen ist.

1/16

0149489

FIG. 1

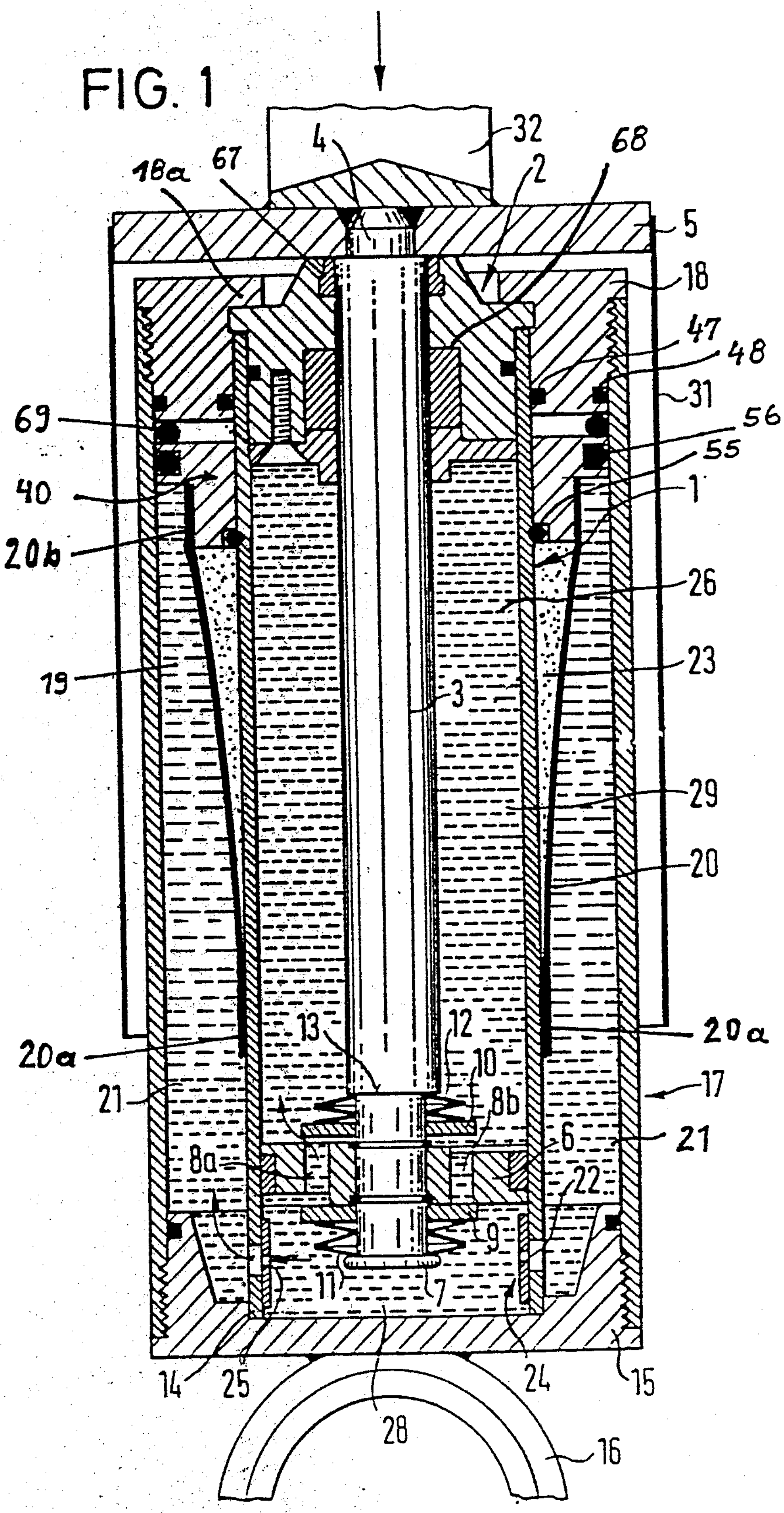

2/6

0149489

FIG. 2

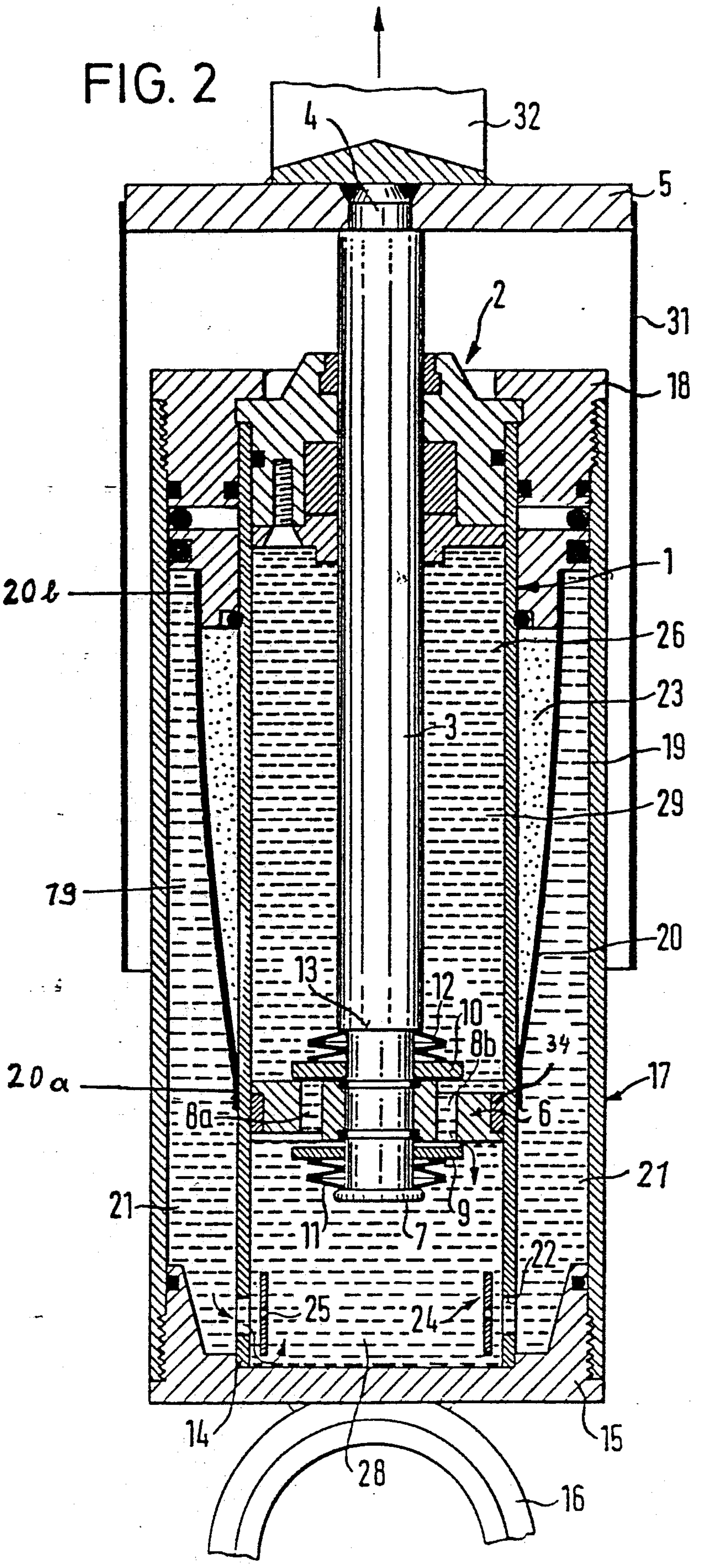

3/4

0149489

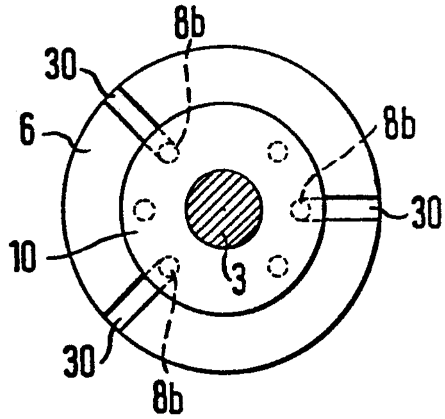


FIG. 3

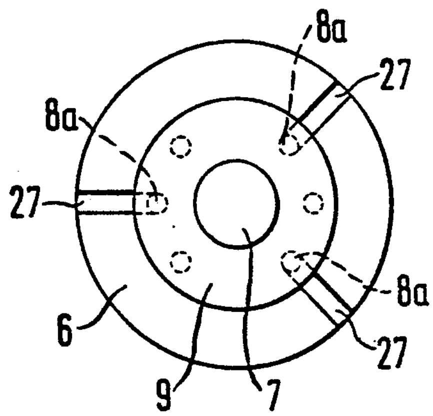


FIG. 4

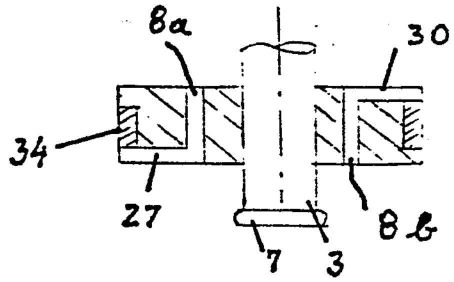


FIG. 5

FIG. 6

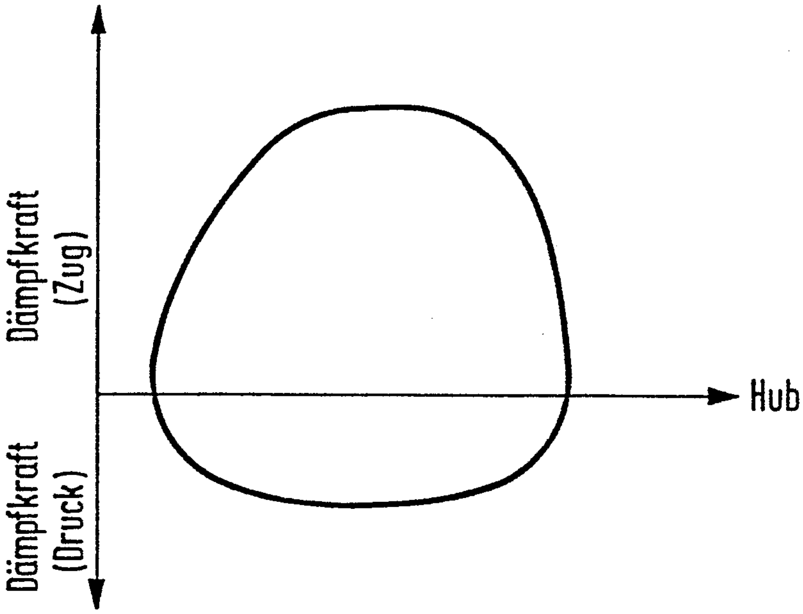
Dämpfkraft (Zug)
Dämpfkraft (Druck)
Hub

FIG. 7

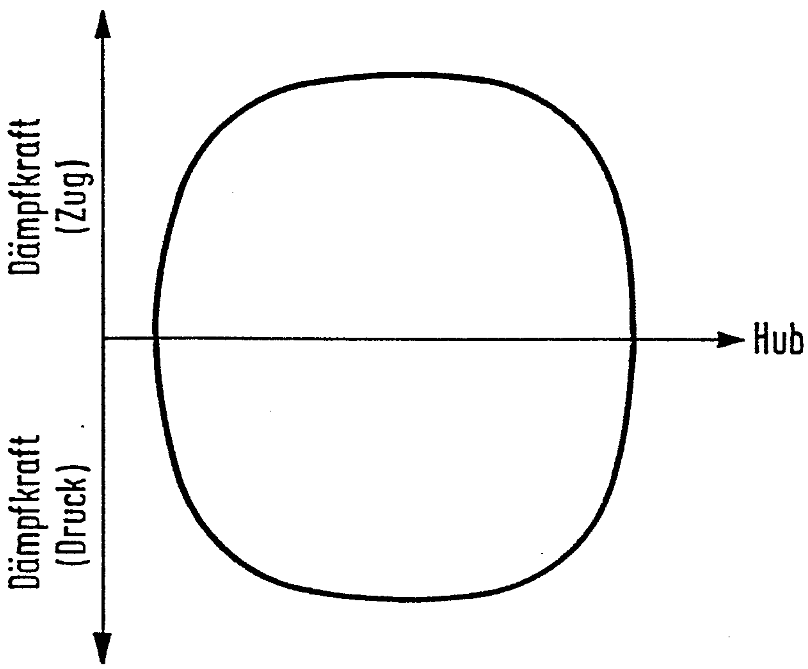
Dämpfkraft (Zug)
Dämpfkraft (Druck)
Hub

0149489

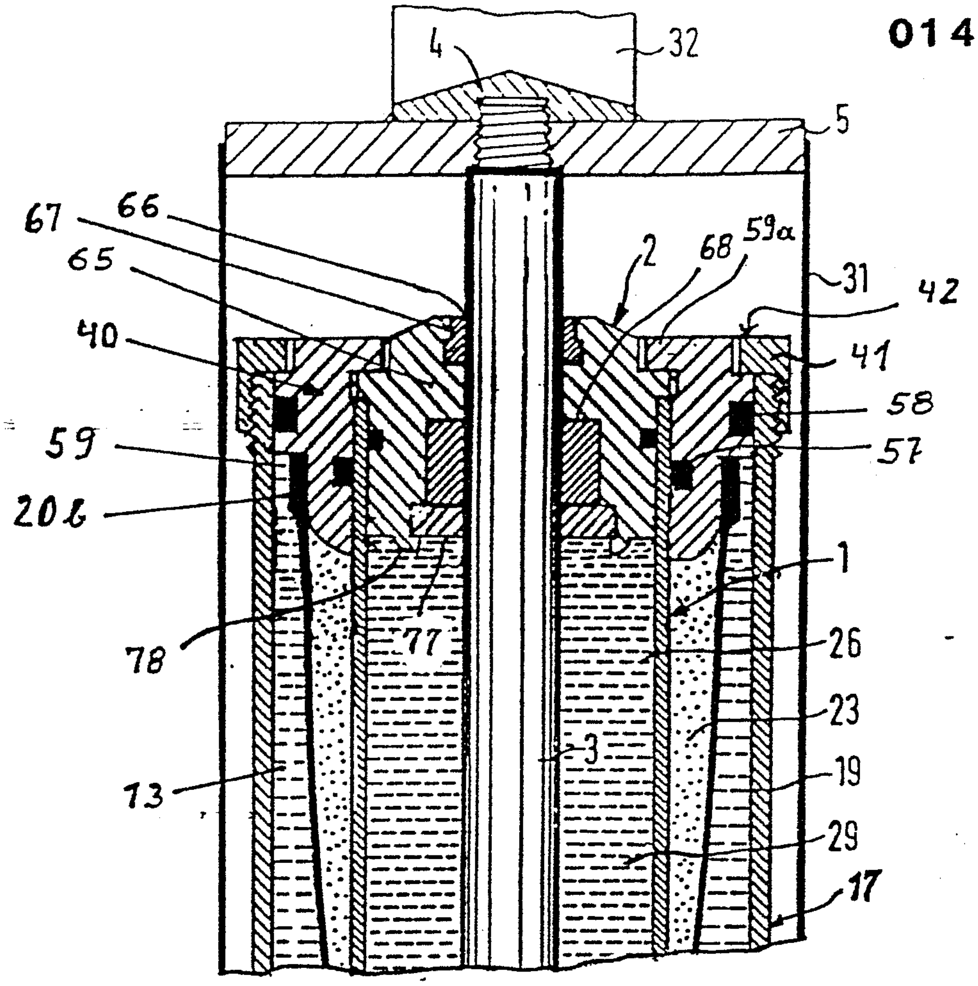


FIG. 8

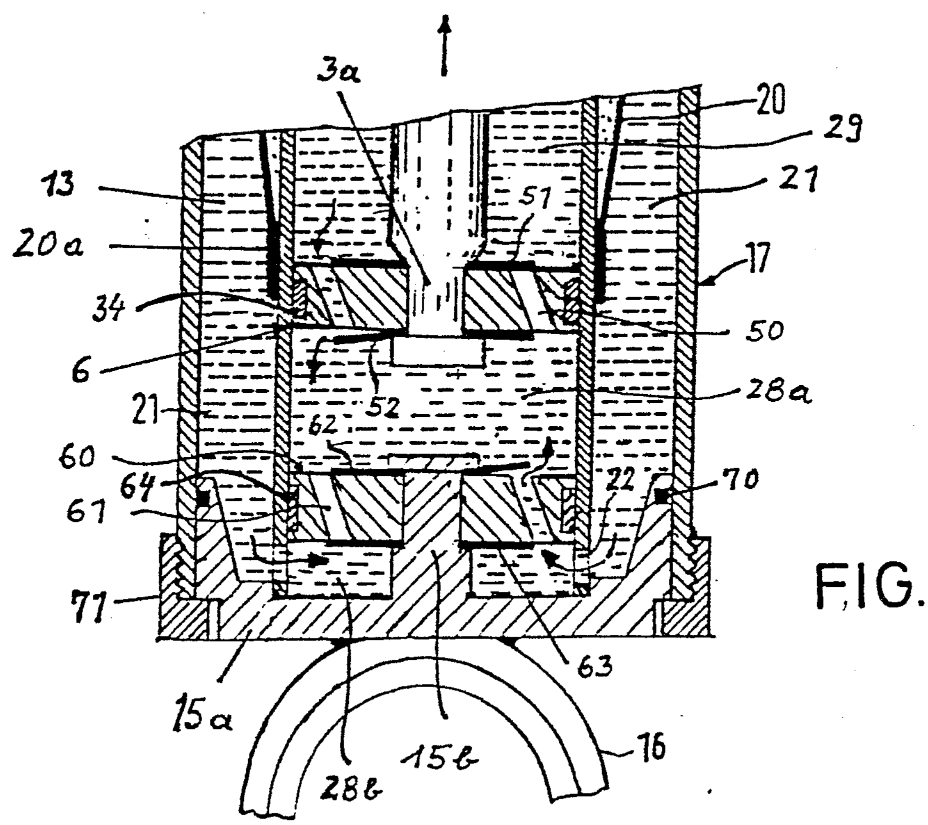


FIG. 9

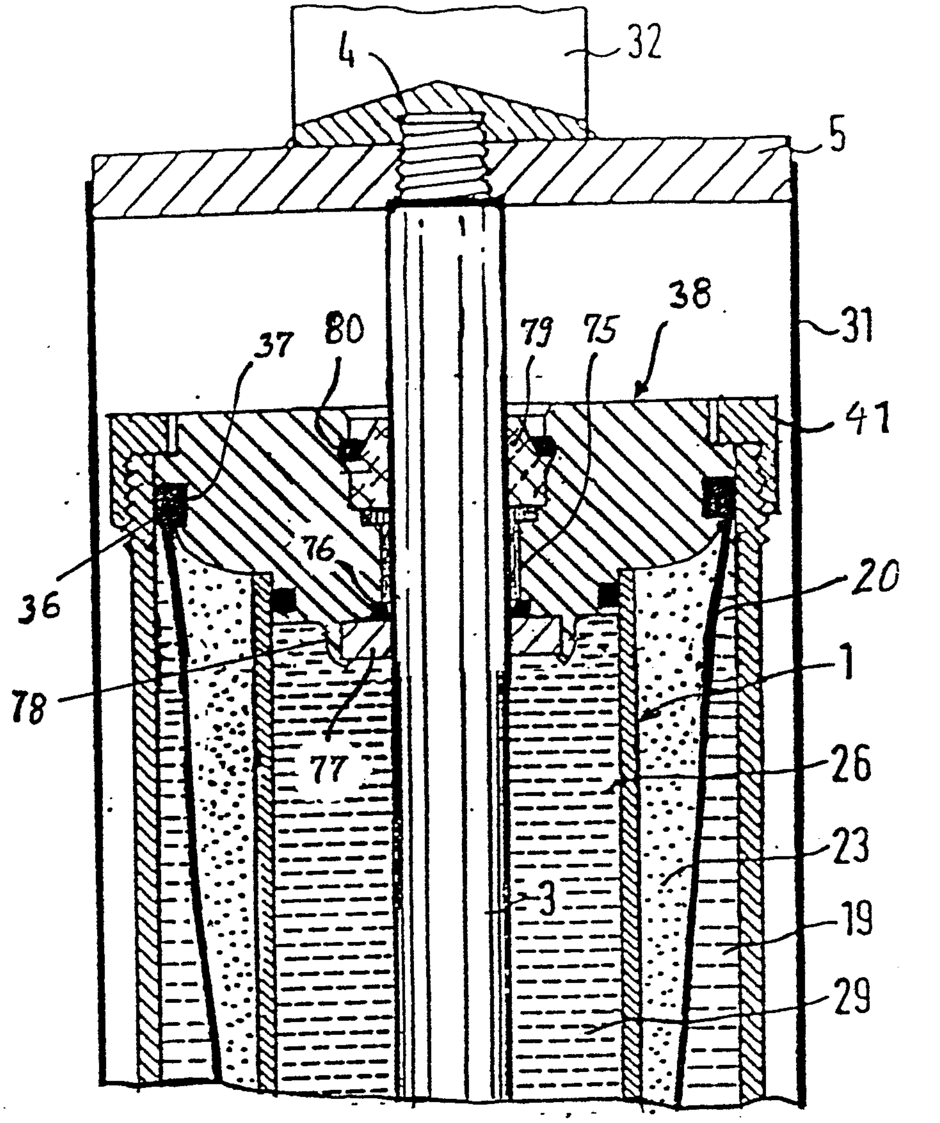


FIG. 10